# EUROPÄISCHE PATENTANMELDUNG

(11) **EP 4 361 476 A1**
(43) Veröffentlichungstag der Anmeldung: **01.05.2024**
(21) Anmeldenummer: 22204523.9
(22) Anmeldetag: 28.10.2022
(51) Int. Cl.: F16K 15/04

(54) **RÜCKSCHLAGVENTIL**

(71) Anmelder: Poppe & Potthoff GmbH, 33824 Werther (DE)
(72) Erfinder: BREDENKAMP, Philipp, 33617 Bielefeld (DE); KOHLMEYER, Katrin, 33619 Bielefeld (DE); MARTINEZ MUNOZ, Ricardo, 33619 Bielefeld (DE); RIXE, Björn, 33611 Bielefeld (DE); SCHIPPERS, Carsten, 33824 Werther (DE)
(74) Vertreter: Bardehle Pagenberg Partnerschaft mbB Patentanwälte Rechtsanwälte

(57) **Zusammenfassung**

Ein Rückschlagventil (1) zur Einspeisung von gasförmigen Medien, insbesondere Wasserstoff umfasst eine Einlassöffnung (30), einen Absperrkörper (20) und mindestens eine Auslassöffnung (40). Der Absperrkörper (20) ist in einem ersten Zustand so positioniert, dass er die Einlassöffnung (30) absperrt und die mindestens eine Auslassöffnung (40) abdeckt. In einem zweiten Zustand ist der Absperrkörper (20) derart zur Position des ersten Zustands verschoben, dass die Einlassöffnung (30) nicht mehr abgesperrt ist und die mindestens eine Auslassöffnung (40) nur teilweise abgedeckt oder vollständig frei ist, so dass das gasförmige Medium von der Einlassöffnung (30) durch die mindestens eine Auslassöffnung (40) ausgeleitet wird.

## Beschreibung

### 1. Technisches Gebiet

Die vorliegende Offenbarung betrifft ein Rückschlagventil mit und ohne Umströmungskörper zur Einspeisung gasförmiger Medien, wie Wasserstoffgas in Druckbehälter und andere nachgelagerte Baugruppen.

### 2. Stand der Technik

Bei der Befüllung von Druckbehältern oder anderen Baugruppen mit gasförmigen Medien, wie gasförmigem Wasserstoff H2, kann ein Temperaturunterschied zwischen dem Druckbehälter und dem gasförmigen Medium bestehen. H2-Gas kann in einigen Anwendungen beispielsweise bei -40°C in einen entsprechenden Druckbehälter eingespeist werden. Dabei soll eine ungewollte Ausströmung des gasförmigen Mediums verhindert werden, wozu typischerweise Rückschlagventile verwendet werden. Die erwähnten Druckbehälter umfassen typischerweise eine Vielzahl möglicher, einem Rückschlagventil vor- oder nachgestellter Bauteile zur Führung des gasförmigen Mediums. Einige Rückschlagventile zur Einspeisung gasförmiger Medien sind aus dem Stand der Technik bekannt.

EP 3 315 837 betrifft ein Rückschlagventil zur Gaseinspritzung in einen Gastank, wobei das Rückschlagventil einen Ventilsitz, ein Gehäuse, das in dem Einspritzkanal befestigt ist, während ein Raum zwischen einer inneren Umfangsfläche des Einspritzkanals und dem Gehäuse vorgesehen ist, um zu ermöglichen, dass Gas durch den Raum strömt, und ein axial bewegliches Ventilelement beinhaltet.

Ferner betrifft DE 10 2014 016 976 A1 ein Rückschlagventil für Hochdruckgasanwendungen mit einem ersten und einem zweiten Gehäuseteil, welche zusammen ein Ventilgehäuse ausbilden, mit einem Ventilsitz in dem Ventilgehäuse und einer in dem Ventilgehäuse gegen die Kraft einer Feder beweglichen Ventilkörper. Das beschriebene Rückschlagventil ist dadurch gekennzeichnet, dass zwischen den beiden Gehäuseteilen eine metallische Abdichtung vorgesehen ist. Im geöffneten Zustand kann das Rückschlagventil entlang seiner vollen Länge durchströmt werden.

EP 2 982 889 B1 betrifft ein Rückschlagventilelement, das so eingerichtet ist, dass es in einem Strömungsweg verschiebbar ist, der sich stromabwärts von einem Ventilsitz erstreckt, der eine Öffnung zum Einleiten eines Fluids aufweist, und wird durch eine darauf ausgeübte Vorschließdruckkraft in Richtung einer stromaufwärts gelegenen Seite gegen den Ventilsitz gedrückt. Das Rückschlagventilelement hat einen Arretierabschnitt, der an einer äußeren Umfangsfläche desselben vorgesehen ist, einen Stützabschnitt, der ein Gleitwiderstandsvermittlungselement so stützt, dass das Gleitwiderstandsvermittlungselement entlang der Wand des stromabwärtigen Strömungswegs gleitet, wenn das Rückschlagventilelement stromaufwärts und stromabwärts verschoben wird.

EP 2 275 726 B1 betrifft eine Ventilanordnung zum Regeln der Strömung eines Fluids, umfassend: eine Kugel, die ein Kugelvolumen definiert und mit einer Ventilsitzregion in Eingriff gebracht werden kann, um das Strömen von Fluid durch eine Leitung, die eine Innenwand hat, zu verhindern, eine Vorspanneinrichtung zum Drängen der Kugel in Eingriff mit der Ventilsitzregion und einen Kolben, der ein Kolbenvolumen definiert und sich zwischen der Vorspanneinrichtung und der Kugel befindet und im Gebrauch angeordnet ist, um sich in der Leitung gegen die Kraft der Vorspanneinrichtung zu bewegen, wenn in die Ventilanordnung eintretendes, unter Druck stehendes Fluid auf die Kugel wirkt.

Weitere aus dem Stand der Technik bekannte Rückschlagventile sind in US 3,356,103 und DE 10 2015 118 843 A1 beschrieben.

### 3. Zusammenfassung

Die aus dem Stand der Technik bekannten Rückschlagventile weisen jedoch einige Nachteile auf. Beispielsweise können konventionelle Rückschlagventile hohe Bauraumanforderungen und einen hohen Durchflusswiderstand aufweisen. Solche Rückschlagventile können zudem komplex aufgebaut sein und durch die Vielzahl an verbauten Komponenten potenzielle Leckagestellen aufweisen - was die Lebensdauer und die möglichen Einsatzgebiete des Ventils verringert und die Herstellungskosten erhöht. Auch eignen sich konventionelle Rückschlagventile meist nicht zum effizienten und gleichzeitig sicheren Befüllen von Druckspeichern für gasförmige Medien wie H₂-Gas oder nur bei geringen Durchflussraten. Der vorliegenden Offenbarung liegt daher das Problem zugrunde, einige der beschriebenen Nachteile des Stands der Technik zumindest teilweise zu verringern.

Dieses Problem wird zumindest teilweise durch den Gegenstand der unabhängigen Ansprüche gelöst. Weitere beispielhafte Ausführungsformen sind in den abhängigen Ansprüchen beschrieben. Wo nicht anders angegeben sind Materialeigenschaften nach den einschlägigen Normen zu bestimmen.

In einer Ausführungsform betrifft die vorliegende Offenbarung ein Rückschlagventil zur Einspeisung von gasförmigen Medien, insbesondere von Wasserstoff in einen Behälter. Das Rückschlagventil umfasst eine Einlassöffnung, einen Absperrkörper und mindestens eine Auslassöffnung, vorzugsweise mehrere Auslassöffnungen, wobei in einem ersten Zustand der Absperrkörper so positioniert ist, dass er die Einlassöffnung absperrt und die mindestens eine Auslassöffnung abdeckt und wobei in einem zweiten Zustand der Absperrkörper derart zur Position des ersten Zustands verschoben ist, dass die Einlassöffnung nicht mehr abgesperrt ist und die mindestens eine Auslassöffnung nur teilweise abgedeckt oder vollständig frei ist, so dass das gasförmige Medium von der Einlassöffnung direkt durch die mindestens eine Auslassöffnung ausgeleitet wird. Der Absperrkörper wird in einigen Ausführungsformen dabei entlang seiner Längsrichtung nicht umströmt. Durch die Auslassöffnung(en) kann das Gasförmige Medium daher z.B. direkt in einen Druckbehälter wie einen Hochdruckwasserstofftank geleitet werden.

Diese Ausführungsform der vorliegenden Offenbarung reduziert die Komponentenanzahl sowie Anzahl möglicher Dichtstellen. Es wird ein funktionsfähiges Absperrkörper-Dichtkonzept bereitgestellt, dass mit reduziertem Bauraum, reduziertem Durchflusswiderstand, reduzierten Vibrationen und verbessertem Absperrverhalten auch bei größeren Druckschwankungen einhergeht was u.a. dadurch erreicht wird, dass der Absperrkörper nur von vorne angeströmt wird und nicht entlang seiner Längsrichtung umströmt wird. Ferner verbessern die Ventile gemäß der vorliegenden Offenbarung die Temperaturverteilung während der Betankung.

Es hat sich gezeigt, dass die Ventile der vorliegenden Offenbarung eine Durchmesserreduktion von ca. 30% im Vergleich herkömmlichen Rückschlagventilen bei gleicher oder sogar besserer Leistungsfähigkeit bereitstellen. Die reduzierte Komponentenanzahl vereinfacht die Fertigung, reduziert die (Material-)kosten und den Arbeitsaufwand. Die reduzierte Anzahl der Dichtstellen, und damit möglicher Leckagestellen, verringert Verluste des gasförmigen Mediums während der Befüllung und / oder während der Aufbewahrung des gasförmigen Mediums im Druckbehälter.

Beispielsweise kann das Rückschlagventil derart gestaltet sein, dass das gasförmige Medium von der Einlassöffnung zur Auslassöffnung nur an einer Vorderseite des Absperrkörpers vorbeiströmt und von dieser zu der mindestens einen Auslassöffnung geleitet wird. Dies reduziert den Strömungsweg des gasförmigen Mediums durch das Rückschlagventil und reduziert dadurch die Bauraum- und Materialanforderung and das Rückschlagventil. Zudem ermöglicht dieser Aufbau einen seitlichen Auslass des gasförmigen Mediums aus dem Rückschlagventil, so dass das gasförmige Medium beispielsweise direkt gegen die Wand das Druckbehältnisses, in das das gasförmige Medium geleitet wird, einströmen kann. Dies kann zu einer gleichmäßigeren Temperaturverteilung im Druckbehälter und damit einer geringeren Materialbeanspruchung durch unterschiedliche thermische Ausdehnung des Druckbehältnisses führen.

Ferner können mögliche Ausführungsformen des Rückschlagventils ein Federelement umfassen, das den Absperrkörper in einem ersten Zustand gegen einen Ventilsitz der Einlassöffnung drückt und das in einem zweiten Zustand durch den Druck des Einströmenden gasförmigen Mediums komprimiert wird. Die Verwendung eines solchen Federelements stellt eine einfache Möglichkeit dar, den Absperrkörper ohne aktive Ansteuerung des Absperrkörpers zwischen einem ersten Zustand, in dem das Ventil geschlossen ist und ungewolltes Ausströmen des gasförmigen Mediums verhindert, und einem zweiten Zustand, in dem das Ventil geöffnet ist und Gas in den Druckbehälter einströmen kann, zu bewegen. Eine solche einfache Ausführungsform vereinfacht den Aufbau des Rückschlagventils, indem es die Anzahl der benötigten Komponenten und damit die Anzahl potenzieller Leckagestellen, den Arbeitsaufwand zur Montage, die Bauraum- und die Materialanforderungen reduziert.

Beispielsweise kann das Rückschlagventil mindestens eine Auslassöffnung aufweisen, die einen Winkel grösser als 90° mit einer Längsachse des Rückschlagventils einschließt. So behält das gasförmige Medium, das entlang der Längsrichtung des Rückschlagventils in das Rückschlagventil eintritt, nach Austritt der mindestens einen Auslassöffnung eine Impulskomponente entlang der Längsachse des Rückschlagventils bei. Dadurch können niedrige Leitungswiderstände für das gasförmige Medium realisiert und niedrige Befüllzeiten erreicht werden. Ferner führt diese Konfiguration dazu, dass sich das gasförmige Medium, das in einen Druckbehälter einströmt, besser durchmischt. Dadurch wird die räumliche Temperaturverteilung im Druckbehälter gleichmäßiger. Die Tatsache, dass sich die Austrittsöffnungen nicht in einer nachgeschalteten Baugruppe hinter dem Absperrelement befinden, sondern umlaufend seitlich am Absperrelement positioniert sein können, reduziert die Bauraumanforderung des Rückschlagventils, während durch den Winkel von mehr als 90° gleichzeitig ein Teil der Impulskomponente des gasförmigen Mediums entlang der Längsachse beibehalten wird. Somit stellt diese Ausführungsform eine besonders vorteilhafte Kombination dar, die gleichzeitig die Bauraumanforderung und die Befüllzeit reduzieren kann.

Versuche und Simulationen der Erfinder haben gezeigt, dass es besonders vorteilhaft ist, wenn der Winkel, den die Auslassöffnung mit der Längsachse des Ventils einschließt, kleiner als 140° ist, oder kleiner als 130° ist oder 125° beträgt. Dadurch lässt sich die Einströmung des gasförmigen Mediums derart weiter optimieren, dass eine möglichst gleichmäßige Temperaturverteilung im Druckbehälter und niedrigere Leitungswiderstände und damit kurze Befüllzeiten erreicht werden können.

Um das Strömungsverhalten des gasförmigen Mediums weiter zu optimieren, kann die mindestens eine Auslassöffnung des Rückschlagventils so angeordnet sein, dass das gasförmige Medium beim Ausströmen durch die Auslassöffnung auch eine tangentiale Impulskomponente in Bezug auf eine Zylinderfläche erhält, die rotationssymmetrisch um die Längsachse des Ventils angeordnet ist. Z.B. können die Auslassöffnungen einen Winkel mit einer Tangente an die Zylinderfläche am Ort der entsprechenden Auslassöffnung einschließen, wobei die Tangente senkrecht zur Längsachse ist und der Winkel zwischen 60° und 90° beträgt, oder zwischen 70° und 80° beträgt, oder 75° beträgt.

Die tangentiale Impulskomponente führt dazu, dass das gasförmige Medium beim Ausströmen, z.B. in einen Druckbehälter, in Rotation versetzt wird. Dadurch können Rotationseffekte im Zusammenhang mit einem beispielsweise zylindrischen Druckbehälter ausgenutzt werden. Diese können insbesondere zu einer verbesserten Durchmischung des gasförmigen Mediums, damit zur Reduktion der örtlichen Temperaturspitzen im Druckbehälter und, damit verbunden, zu einer geringeren Materialbelastung des Druckbehälters durch reduzierte Unterschiede in der thermischen Ausdehnung führen. Im Allgemeinen sind auch Ausführungsformen möglich, bei denen unterschiedliche Ausströmungsöffnungen oder mehrstufige Ausströmungsöffnungen das gasförmige Medium mit unterschiedlichen Geschwindigkeiten, beispielsweise hinsichtlich des Betrags und / oder der Richtung, in den Druckbehälter einlenken.

Der Absperrkörper des Rückschlagventils kann kugelförmig sein. Diese einfache Ausführungsform kann einfach in Abhängigkeit der Anforderungen an das entsprechende Rückschlagventil angepasst werden, beispielsweise durch eine Veränderung des Radius des kugelförmigen Absperrkörpers. Zudem ermöglicht die runde Oberfläche des Absperrkörpers das ungestörte, beispielsweise laminare, Vorbeiströmen des gasförmigen Mediums vom Einlass zu den Auslassöffnungen. Dies kann den Leitungswiderstand des gasförmigen Mediums reduzieren und den möglichen Durchsatz des Rückschlagventils erhöhen. Insbesondere in Kombination mit den seitlich am Absperrkörper positionierten Auslassöffnungen kann die Symmetrie des kugelförmigen Absperrkörpers und das damit verbundene gleichmäßige Vorbeiströmen des gasförmigen Mediums am Absperrkörper zu den Auslassöffnungen zu einer gleichmäßigen Verteilung des gasförmigen Mediums im Druckbehälter führen. Zudem kann ein kugelförmiger Absperrkörper weder in einer falschen Orientierung eingebaut werden noch während der Nutzung das Absperrventils in eine ungewollte Ausrichtung rotieren.

Der kugelförmige Absperrkörper des Rückschlagventils kann beispielsweise einen Durchmesser von höchstens 50.0 mm und bevorzugt zwischen 4.0 mm und 20.0 mm aufweisen. Solche Größen des Absperrkörpers bringen geringe Material- und Bauraumanforderungen und verbesserte Strömungseigenschaften mit sich.

Ferner kann das Rückschlagventil in einer möglichen Ausführungsform mehrere Auslassöffnungen umfassen, die, vorzugsweise äquidistant, entlang eines Kreises um die Längsachse des Ventils angeordnet sind, so dass jede Auslassöffnung dem Ausströmenden gasförmigen Medium einen unterschiedlichen Impuls verleiht. So kann das gasförmige Medium beim Austritt aus der Auslassöffnungen im Druckbehälter in Rotation versetzt werden. Dies kann die Mediendurchmischung verbessern und örtliche Temperaturspitzen im Druckbehälter reduzieren. Somit sinkt die Materialbeanspruchung durch unterschiedliche thermische Ausdehnung im Druckbehälter. Des Weiteren können die beliebig vielen Auslassöffnungen, beispielsweise hinsichtlich ihrer Anzahl, Form und Ausrichtung, an beispielsweise die Art, Form und Größe des Druckbehälters angepasst werden.

Eine weitere Ausführung betrifft ein Rückschlagventil zur Einspeisung von gasförmigen Medien, insbesondere Wasserstoff, das eine Einlassöffnung, einen Absperrkörper, ein Federelement und einen Umströmungskörper aufweist, in den das Federelement und der Absperrkörper zumindest teilweise integriert sind. Dabei weist der Umströmungskörper mindestens eine Auslassöffnung auf. In einem ersten Zustand ist der Absperrkörper derart positioniert, dass dieser die Einlassöffnung abschließt und die mindestens eine Auslassöffnung abdeckt. In einem zweiten Zustand ist der Sperrkörper derart zur Position des ersten Zustands verschoben, dass das gasförmige Medium aus der Einlassöffnung eintreten kann und die mindestens eine Auslassöffnung nur teilweise abgedeckt ist, so dass das gasförmige Medium innerhalb des Umströmungskörpers direkt durch die mindestens eine Auslassöffnung nur den durch nach außen an der Außenfläche des Umströmungskörpers entlang geleitet wird. Diese Ausführungsform reduziert die Bauraumanforderung dadurch, dass der Umströmungskörper dem Absperrkörper und dem Federelement nicht nachgestellt ist, sondern das Federelement und teilweise den Absperrkörper beinhaltet. Die Tatsache, dass der Umströmungskörper gleichzeitig auch die Führung für den Absperrkörper darstellt, reduziert die Anzahl der benötigten Komponenten und damit die Materialanforderungen und den Arbeitsaufwand zur Montage. Die Verwendung eines Umströmungskörpers kann insbesondere zu einer verbesserten Durchmischung des gasförmigen Mediums, damit zur Reduktion der örtlichen Temperaturextrema in dem dem Rückschlagventil nachgestellten Bauteil und, damit verbunden, zu einer geringeren Materialbelastung des nachgestellten Bauteils durch reduzierte Unterschiede in der thermischen Ausdehnung führen.

Beispielsweise kann das Rückschlagventil mit Umströmungskörper derart gestaltet sein, dass das gasförmige Medium von der Einlassöffnung zur Auslassöffnung nur an einer Vorderseite des Absperrkörpers vorbeifließt und von dieser zu der mindestens einen Auslassöffnung und in den Umströmungskörper geleitet wird. Dies reduziert den Strömungsweg des gasförmigen Mediums durch das Rückschlagventil und reduziert dadurch die Bauraum- und Materialanforderung an das Rückschlagventil. Grundsätzlich ermöglicht die Verwendung eines Umströmungskörpers, den Fluss des gasförmigen Mediums gemäß der bestehenden Anwendungsanforderungen zu kontrollieren. Dadurch werden nicht minder variable Bauformen und Integrationsmöglichkeiten des Rückschlagventils in wasserstoffführende Systeme ermöglicht.

Ferner kann der Umströmungskörper des Rückschlagventils bei jeder der mindestens einen Auslassöffnung eine Vertiefung in seiner Außenfläche parallel zur Längsachse des Rückschlagventils umfassen, in der das gasförmige Medium nach dem Ausströmen aus der Auslassöffnung entlangströmt. Diese Ausführungsform, insbesondere durch die Vertiefungen an der Außenfläche des Umströmungskörpers, ermöglicht eine einfache Fertigung eines einteiligen Umströmungskörpers, was den Materialbedarf und den Arbeitsaufwand in der Fertigung reduzieren kann. Wie bei anderen Ausführungsformen kann der Absperrkörper kugelförmig sein und das Ventil kann mehrere Auslassöffnungen umfassen, die, vorzugsweise äquidistant, entlang eines Kreises um die Längsachse des Ventils angeordnet sein können.

Diese einfache Ausführungsform kann in Abhängigkeit der Anforderungen an das entsprechende Rückschlagventil angepasst werden, beispielsweise durch eine Veränderung des Radius des kugelförmigen Absperrkörpers. Zudem ermöglicht die runde Oberfläche des Absperrkörpers ungestört das Vorbeiströmen des gasförmigen Mediums vom Einlass zu den Auslassöffnungen. Insbesondere in Kombination mit den seitlich am Absperrkörper positionierten Auslassöffnungen kann die Symmetrie des kugelförmigen Absperrkörpers und das damit verbundene gleichmäßige Vorbeiströmen des gasförmigen Mediums am Absperrkörper zu den Auslassöffnungen zu einer gleichmäßigen Verteilung des gasförmigen Mediums im Druckbehälter oder andere nachgelagerter Baugruppen wie etwa Verteilerrohre führen. Zudem kann ein kugelförmiger Absperrkörper weder in einer falschen Orientierung eingebaut werden noch während der Nutzung des Rückschlagventils in einer ungewollten Ausrichtung rotieren.

Beispielsweise kann jede Vertiefung des Umströmungskörpers gegenüberliegend der jeweiligen Auslassöffnung parallel zur Längsachse des Rückschlagventils eine Ausfräsung umfassen. Eine solche Ausfräsung kann das Ausströmverhalten des gasförmigen Mediums aus dem Umströmungskörper auf die nachgestellte Baugruppe, beispielsweise ein Druckbehälter, abstimmen. Dies kann beispielsweise den Leitungswiderstand des gasförmigen Mediums während seiner Leitung durch den Umströmungskörper reduzieren und damit geringe Befüllzeiten erreichen.

In einer möglichen Ausführungsform kann die Ausfräsung ellipsenförmig sein. Diese Form kann ein besonders widerstandsloses und gleichmäßiges Ausströmen des gasförmigen Mediums ermöglichen, so die Befüllgeschwindigkeit erhöhen und die Durchmischung des gasförmigen Mediums verbessern, um die thermische Beanspruchung des nachgestellten Bauteils durch unterschiedliche thermische Ausdehnung zu reduzieren.

Beispielsweise kann das Rückschlagventil mit Umströmungskörper so gestaltet sein, dass der Umströmungskörper das gasförmige Medium in eine nachgeschaltete Baugruppe leitet, die nicht Teil des Rückschlagventils ist. Dadurch, dass kein weiteres Verbindungselement zur nachgestellten Baugruppe nötig ist, wird die Bauraumanforderung geringgehalten.

Ferner kann das Rückschlagventil mit Umströmungskörper in einer möglichen Ausführungsform mehrere Auslassöffnungen umfassen, die, vorzugsweise äquidistant, entlang eines Kreises um die Längsachse des Ventils angeordnet sind, so dass jede Auslassöffnung dem Ausströmenden gasförmigen Medium einen unterschiedlichen Impuls verleiht. So können die beliebig vielen Auslassöffnungen, beispielsweise hinsichtlich ihrer Anzahl, Form und Ausrichtung, an beispielsweise die Art, Form und Größe des Umströmungskörpers angepasst werden.

Der Umströmungskörper des Rückschlagventils kann aus einem Stück gefertigt sein. Dies kann die Stabilität und Lebensdauer des Umströmungskörpers erhöhen und gleichzeitig die Materialanforderungen, die Komplexität und den nötigen Arbeitsaufwand in der Fertigung des Umströmungskörpers reduzieren.

Weitere Ausführungsformen des Rückschlagventils mit oder ohne Umströmungskörper können beispielsweise aus einem medienbeständigen Material, insbesondere beispielsweise einem wasserstoffbeständigen Material wie in EP 4 032 999 A1 beschrieben, gefertigt sein. Diese Ausführungsform verringert die Abnutzung des Rückschlagventils, beispielsweise durch Wasserstoffversprödung, was die Lebensdauer des Rückschlagventils erhöht und die Notwendigkeit von Reparaturarbeiten und der Ersetzung einzelner Komponenten verringert. Es sind auch Ausführungsformen möglich, in denen nur einzelne Komponenten des Rückschlagventils mit oder ohne Umströmungskörper aus Medien beständigen Materialien gefertigt sind. Dies ermöglicht beispielsweise eine gezielte Optimierung der Stabilität der am stärksten beanspruchten Komponenten.

Die vorliegende Offenbarung umfasst auch eine Betankungsbaugruppe für ein gasförmiges Medium, insbesondere Wasserstoff, umfassend einen Betankungspfad, einen Einlass für das gasförmige Medium, der mit dem Betankungspfad verbunden ist, einen Auslass für das gasförmige Mediun, und ein Rückschlagventil wie hierin beschrieben, das mit dem Auslass verbunden ist und in einen Druckbehälter mündet.

Die vorliegende Offenbarung umfasst auch Verteilbaugruppe für ein gasförmiges Medium, insbesondere Wasserstoff, umfassend einen Grundkörper, einen Einlass für das gasförmige Medium, der mit dem Grundkörper verbunden ist, einen Auslass für das gasförmige Medium, und ein Rückschlagventil wie hierin beschrieben, das mit dem Auslass verbunden ist.

### 4. Kurzbeschreibung der Zeichnungen

Die Zeichnungen zeigen:
- **Fig. 1**: einen Längsschnitt durch ein Rückschlagventil gemäß einer möglichen Ausführungsform der vorliegenden Offenbarung ohne Umströmungskörper;
- **Fig. 2**: eine Seitenansicht des Rückschlagventils von Fig. 1;
- **Fig. 3**: eine Querschnittsansicht des Rückschlagventils von Fig. 1 und Fig. 2 auf Höhe der Auslassöffnungen;
- **Fig. 4**: einen Längsschnitt durch ein Rückschlagventil gemäß einer möglichen Ausführungsform der vorliegenden Offenbarung mit Umströmungskörper
- **Fig. 5**: eine Ansicht der Unterseite des Rückschlagventils von Fig. 4
- **Fig. 6**: eine Seitenansicht des Umströmungskörpers eines Rückschlagventils gemäß einer möglichen Ausführungsform

### 5. Detaillierte Beschreibung einiger Ausführungsbeispiele

Im Folgenden werden einige exemplarische Ausführungsformen der vorliegenden Offenbarung am Beispiel einiger exemplarischer Rückschlagventile zur Einspeisung gasförmiger Medien beschrieben. Hierbei sind verschiedene Merkmalskombinationen mit Bezugnahme auf die dargestellten Ausführungsformen beschrieben. Naturgemäß müssen nicht alle Merkmale der beschriebenen Ausführungsformen vorhanden sein, um die vorliegende Erfindung zu realisieren. Ferner können die Ausführungsformen durch Kombinieren gewisser Merkmale einer Ausführungsform oder einem oder mehreren Merkmalen einer anderen Ausführungsformen modifiziert werden - falls dies technisch kompatibel und sinnvoll ist - ohne von der Offenbarung und dem Schutzumfang der vorliegenden Erfindung abzuweichen, der durch die Patentansprüche definiert ist.

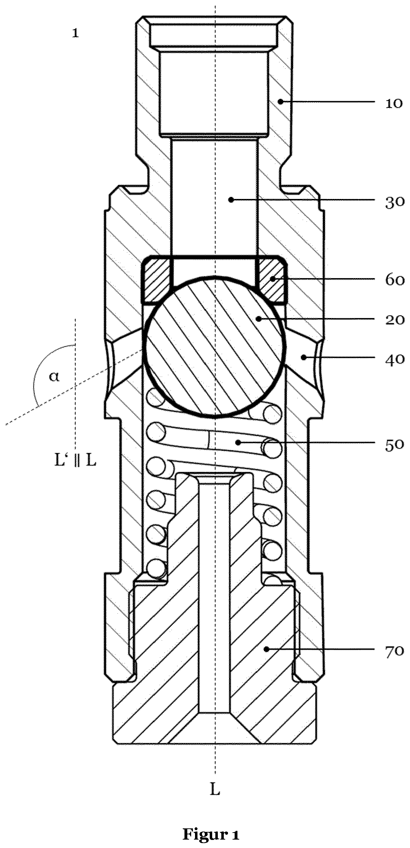

Fig. 1 zeigt einen Längsschnitt durch ein Rückschlagventil 1 gemäß einer möglichen Ausführungsform der vorliegenden Offenbarung ohne Umströmungskörper. Das dargestellte Rückschlagventil umfasst einen Grundkörper 10 einen Absperrkörper 20, einen Einlass 30 für ein gasförmiges Medium wie H2-Gas, mehrere Auslassöffnungen 40, ein Federelement 50, einen Ventildichtsitz bzw. Ventilsitz 60 und ein unteres Grundkörperelement 70. Dabei können die Auslassöffnungen 40 einen Winkel α mit der Längsachse L des Rückschlagventils einschließen, in Fig. 1 dargestellt mithilfe der Achse L', die parallel zur Längsachse L des Rückschlagventils 1 ist.

In der dargestellten Ausführungsform beträgt der Winkel α mehr als 90°. In der beispielhaft dargestellten Position des Absperrkörpers 20 wird der Absperrkörper 20 durch das Federelement 50 nach oben gegen den Ventilsitz 60 gedrückt. Dadurch ist der Einlass 30 abgesperrt und die Auslassöffnungen 40 sind vom Absperrkörper abgedeckt. In diesem Zustand ist das Rückschlagventil 1 geschlossen und kein gasförmiges Medium kann entgegen der definierten Durchflussrichtung durch das Rückschlagventil 1 fließen. Durch ein durch den Einlass 30 einströmendes Gas und einen damit verbundenen Druckanstieg kann der Grundkörper 20 nach unten gedrückt werden, das Federelement 50 stauchen und die Einlassöffnung und die Auslassöffnungen 40 freigeben, sodass das gasförmige Medium durch das Rückschlagventil 1 strömen kann, und zwar direkt vom Einlass 30 zu den Auslassöffnungen 40 ohne den Absperrkörper 20 zu umströmen. Im geöffneten Zustand wird der Absperrkörper 20 daher lediglich von vorne angeströmt, was dazu führt, dass der Absperrkörper 20 sich im Betrieb auch bei strak schwankendem Gasdruck nicht bewegt und dadurch Vibrationen beim Befüllen vermieden werden. Abweichend von der dargestellten Ausführungsform des Rückschlagventils 1 sind weitere Ausführungsformen möglich, beispielsweise aber nicht ausschließlich Rückschlagventile 1 mit anderen Öffnungswinkeln α der Auslassöffnungen 40, einem Absperrkörper 20 anderer Form und oder Größe und / oder einer anderen Ausführungsform des Ventilsitzes 60. Weitere Details der durch Fig. 1 illustrierten Rückschlagventile sind vorstehend in Abschnitt 3 der vorliegenden Offenbarung beschrieben.

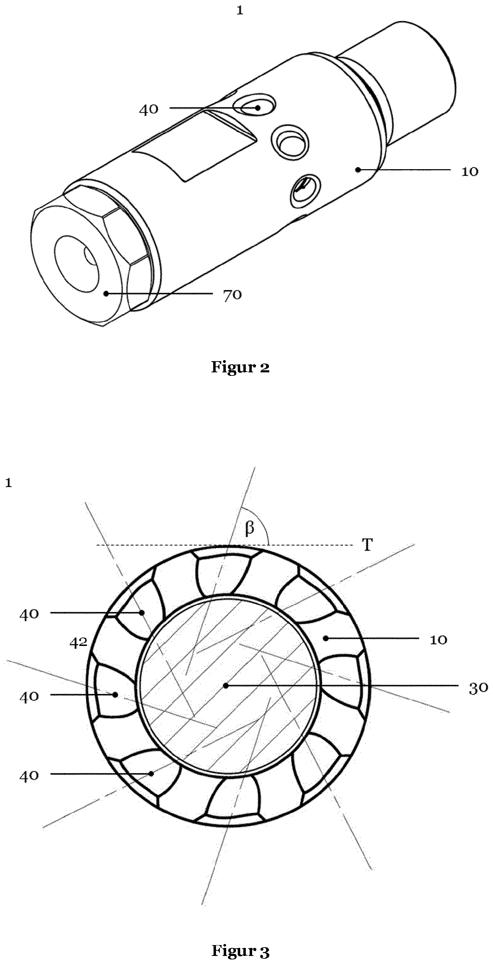

Fig. 2 zeigt eine Seitenansicht eines Rückschlagventils 1 gemäß einer möglichen Ausführungsform umfassend einen Grundkörper 10 mehrere Auslassöffnungen 40 und ein unteres Grundkörperelement 70. In der dargestellten Ausführungsformen sind die Auslassöffnungen 40 auf gleicher Höhe entlang der Längsachse L des Rückschlagventils 1 und äquidistant, entlang eines Kreises um die Längsachse L des Rückschlagventils 1, angeordnet so dass jede Auslassöffnung dem Ausströmenden gasförmigen Medium einen unterschiedlichen Impuls verleihen kann, der teilweise tangential zur Außenfläche des Ventils und longitudinal in Richtung der Längsachse des Ventils nach unten gerichtet ist.

Fig. 3 eine Querschnittsansicht des Rückschlagventils 1 von Fig. 1 und Fig. 2 auf Höhe der Auslassöffnungen 40. Die Auslassöffnungen 40 in der dargestellten Ausführungsform des Rückschlagventils 1 sind äquidistant, entlang eines Kreises um die Längsachse L des Rückschlageventils 1, angeordnet und schließen jeweils mit einer Tangente T an die Außenfläche 42 am Ort der entsprechenden Auslassöffnung 40 einen Winkel β ein. Es sind weitere Ausführungsformen möglich, bei denen die Auslassöffnungen 40 beispielsweise, aber nicht ausschließlich, nicht äquidistant angeordnet sind, sie unterschiedliche Winkel β mit einer Tangente T an den Rückschlagventilquerschnitt einschließen, sie unterschiedlich groß sind und / oder die Auslassöffnungen 40 können beispielsweise auch auf unterschiedlichen Höhen entlang der Längsachse L des Rückschlagventils 1 positioniert sein. Diese Ausgestaltung der Auslassöffnungen führt wie in Abschnitt 3 bereits beschrieben dazu, dass das aus dem Ventil 1 ausströmende Gas in Rotation versetzt wird und gleichzeitig nach unten ausströmt. Dadurch wird erreicht, dass das in einen Druckbehälter einströmende Gas stark durchmischt wird und sich dadurch keine großen Temperaturgradienten ausbilden, selbst wenn der Druckbehälter anfangs auf Umgebungstemperatur war. Die Rückschlagventile der vorliegenden Offenbarung ermöglichen daher ein effizientes, sicheres und materialschonendes Betanken von Druckbehältern mit hohen Betankungsraten.

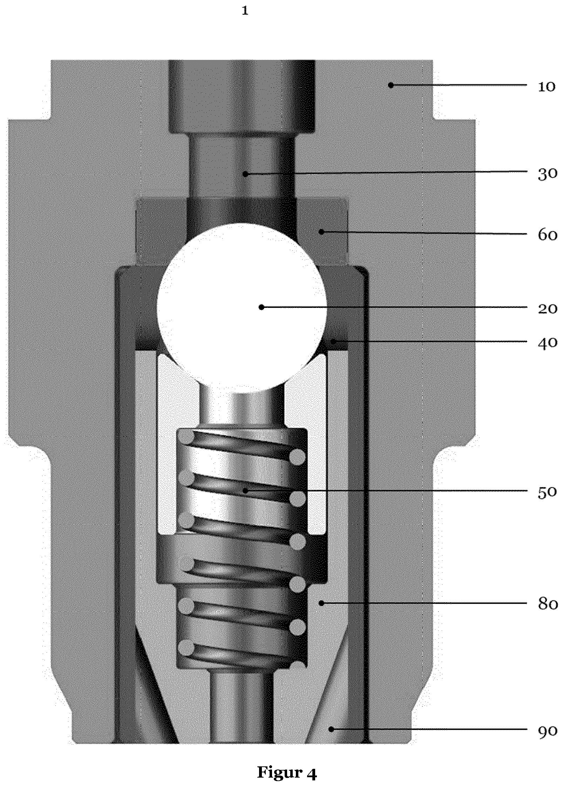

Fig. 4 zeigt eine weitere mögliche Ausführungsform eines Rückschlagventils 1 mit Umströmungskörper 80. Das dargestellte exemplarische Ventil umfasst einen Grundkörper 10, einen Absperrkörper 20, einen Einlass 30, mindestens eine Auslassöffnung 40, ein Federelement 50, einen Dichtsitz bzw. Ventilsitz 60, einen Umströmungskörper 80 und mehrere Ausfräsungen 90 an der Unterseite des Umströmungskörpers 80. In der beispielhaft dargestellten Position des Absperrkörpers 20 wird der Absperrkörper 20 durch das Federelement 50 nach oben gegen den Ventilsitz 60 gedrückt. Dadurch ist der Einlass 30 abgesperrt und die Auslassöffnungen 40 sind abgedeckt. In diesem Zustand ist das Rückschlagventil 1 geschlossen und kein gasförmiges Medium kann durch das Rückschlagventil 1 fließen. Durch ein durch den Einlass 30 einströmendes Gas und einen damit verbundenen Druckanstieg kann der Grundkörper 20 nach unten gedrückt werden, das Federelement 50 stauchen und die Einlassöffnung 60 und die Auslassöffnungen 40 freigeben, sodass das gasförmige Medium an der Vorderseite des Absperrkörper 20 vorbei und um den Umströmungskörper 80 strömen kann bis zum Austritt an den Ausfräsungen 90. Wie in Fig. 4 dargestellt sind das Federelement und der hier kugelförmige Absperrkörper 20 in den Umströmungskörper 80 integriert.

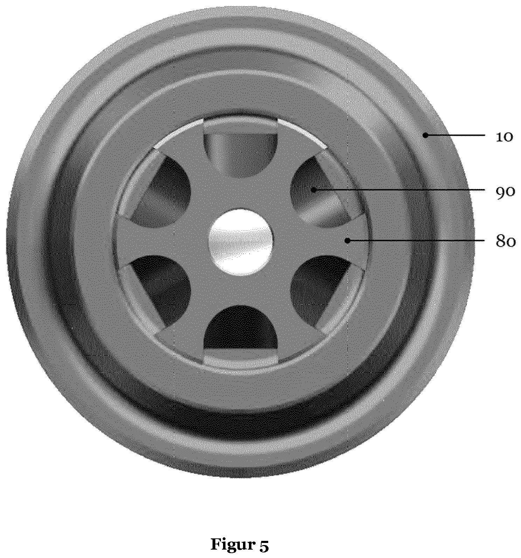

Fig. 5 zeigt eine exemplarische Ansicht der Unterseite des Rückschlagventils von Fig. 4, auf der die Ausfräsungen 90 an der Unterseite des Umströmungskörpers 80 zu sehen sind und der Umströmungskörper 80 im Inneren des Grundkörpers 10 angeordnet ist. Die Ausfräsungen 90 an der Unterseite des Umströmungskörpers 80 sind äquidistant, entlang eines Kreises um die Längsachse L des Rückschlageventils 1, angeordnet und sind hier ellipsenförmig. Es sind weitere Ausführungsformen möglich, beispielsweise aber nicht ausschließlich mit mehr oder weniger Umströmungskörperausfräsungen 90 und / oder in denen die Umströmungskörperausfräsungen 90 was anders positioniert und / oder anders geformt und / oder ausgerichtet sind.

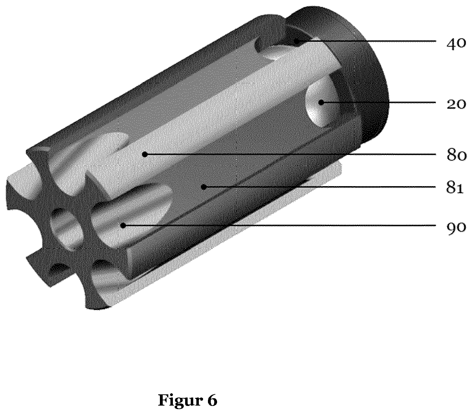

Fig. 6 zeigt eine Seitenansicht des Umströmungskörpers 80 der Ausführungsform von Fig. 4 und Fig. 5. Der Umströmungskörper 80 umschließt den Absperrkörper 20 zumindest teilweise und weist bei jeder der mit der Auslassöffnungen 40 eine längliche Vertiefung 81 in seiner Außenfläche parallel zur Ventilachse L auf, in der das gasförmige Medium nach Ausströmen aus der Auslassöffnung 40 entlang strömen kann, um die Ausfräsungen 90 zu erreichen.

In der exemplarisch dargestellten Ausführungsforum mündet jede Vertiefung 81 in der Außenfläche in einer der Ausfräsungen 90. Damit stellen in der beispielhaft dargestellten Ausführungsform des Umströmungskörpers 80 die Vertiefungen 81 eine Strömungsverbindung zwischen jeweils einer Auslassöffnung 40 und jeweils eine Ausfräsung 90 her. Es sind weitere Ausführungsformen möglich, bei denen beispielsweise eine Vertiefung 81 mit mehreren Auslassöffnungen 40 und / oder mehreren Umströmungskörperausfräsungen 90 verbunden ist und /oder bei denen jede Auslassöffnung 40 und / oder jede Umströmungskörperausfräsung 90 mit mehreren Vertiefungen 81 verbunden ist. Es sind beispielsweise auch Ausführungsformen denkbar, bei denen die Vertiefungen 81, anders als in der dargestellten Ausführungsform, nicht äquidistant entlang eines Kreises und die Längsachse L des Rückschlagventils 1 angeordnet sind und / oder der Umströmungskörper 80 verschiedene Vertiefungen unterschiedlicher Form und / oder Tiefe aufweist.

## Patentansprüche

1. Rückschlagventil (1) zur Einspeisung von gasförmigen Medien, insbesondere Wasserstoff, umfassend:
eine Einlassöffnung (30);
einen Absperrkörper (20); und
mindestens eine Auslassöffnung (40);
wobei in einem ersten Zustand der Absperrkörper so positioniert ist, dass er die Einlassöffnung absperrt und die mindestens eine Auslassöffnung abdeckt; und
wobei in einem zweiten Zustand der Absperrkörper derart zur Position des ersten Zustands verschoben ist, dass die Einlassöffnung nicht mehr abgesperrt ist und die mindestens eine Auslassöffnung nur teilweise abgedeckt oder vollständig frei ist, sodass das gasförmige Medium von der Einlassöffnung durch die mindestens eine Auslassöffnung ausgeleitet wird.

2. Rückschlagventil nach Anspruch 1, wobei das gasförmige Medium von der Einlassöffnung (30) zur Auslassöffnung (40) nur an einer Vorderseite des Absperrkörpers (20) vorbeiströmt und von der Vorderseite des Absperrkörpers zu der mindestens einen Auslassöffnung geleitet wird.

3. Rückschlagventil nach Anspruch 1 oder 2, ferner umfassend:
ein Federelement (50), das den Absperrkörper im ersten Zustand gegen einen Ventilsitz (60) der Einlassöffnung drückt und das im zweiten Zustand durch den Druck des einströmenden gasförmigen Mediums komprimiert ist.

4. Rückschlagventil nach einem der Ansprüche 1 bis 3, wobei die mindestens eine Auslassöffnung (40) einen Winkel (a) größer als 90° mit einer Längsachse (L) des Ventils einschließt, so dass das gasförmige Medium nach Austritt aus der mindestens einen Auslassöffnung eine Impulskomponente entlang der Längsachse des Ventils beibehält.

5. Rückschlagventil nach Anspruch 4, wobei der Winkel (a), den die mindestens eine Auslassöffnung (40) mit der Längsachse (L) des Ventils einschließt, kleiner als 140° ist, oder kleiner als 130° ist, oder 125° beträgt.

6. Rückschlagventil nach einem der Ansprüche 1 bis 5,
wobei die mindestens eine Auslassöffnung (40) so angeordnet ist, dass das gasförmige Medium beim Ausströmen durch die mindestens eine Auslassöffnung eine tangentiale Impulskomponente in Bezug auf eine Zylinderfläche (42) erhält, die rotationssymmetrisch um die Längsachse (L) des Ventils angeordnet ist; und / oder,
wobei die mindestens eine Auslassöffnung (40) einen Winkel (β) mit einer Tangente (T) an die Zylinderfläche (42) am Ort der entsprechenden Auslassöffnung (40) einschließt, wobei die Tangente senkrecht zur Längsachse ist und der Winkel (β) zwischen 60° und 90° beträgt, oder zwischen 70° und 80° beträgt, oder 75° beträgt.

7. Rückschlagventil nach einem der Ansprüche 1 bis 6, wobei der Absperrkörper kugelförmig ist.

8. Rückschlagventil nach Anspruch 7, wobei der Durchmesser des kugelförmigen Absperrkörper kleiner als 50.0 mm oder zwischen 4.0 mm und 20.0 mm ist.

9. Rückschlagventil nach einem der Ansprüche 1 bis 8,
wobei das Ventil mehrere Auslassöffnungen (40) umfasst, die, vorzugsweise äquidistant, entlang eines Kreises um die Längsachse des Ventils angeordnet sind, so dass jede Auslassöffnung dem ausströmenden gasförmigen Medium einen unterschiedlichen Impuls verleiht.

10. Rückschlagventil (1) zur Einspeisung von gasförmigen Medien, insbesondere Wasserstoff, umfassend:
ein Einlassöffnung (30);
einen Absperrkörper (20);
ein Federelement (50); und
einen Umströmungskörper (80), in dem das Federelement (50) und der Absperrkörper (20), zumindest teilweise, integriert sind und der vorzugsweise aus einem Stück gefertigt ist;
wobei der Umströmungskörper (80) mindestens eine Auslassöffnung (40) aufweist; und
wobei in einem ersten Zustand der Absperrkörper derart positioniert ist, dass er die Einlassöffnung abschließt und die mindestens eine Auslassöffnung abdeckt; und in einem zweiten Zustand der Absperrkörper derart zur Position des ersten Zustands verschoben ist, dass das gasförmige Medium aus der Einlassöffnung eintreten kann und die mindestens eine Auslassöffnung nur teilweise abgedeckt ist, so dass das gasförmige Medium innerhalb des Umströmungskörpers direkt durch die mindestens eine Auslassöffnung hindurch nach außen an der Außenfläche des Umströmungskörper entlang geleitet wird.

11. Rückschlagventil nach Anspruch 10, wobei das gasförmige Medium vor der Vorderseite des Absperrkörpers aus der mindestens einen Auslassöffnung austritt und somit weniger als die Hälfte des Absperrkörpers beim Austritt anströmt.

12. Rückschlagventil nach einem der Ansprüche 10 oder 11, wobei der Umströmungskörper bei jeder der mindestens einen Auslassöffnung eine Vertiefung (81) auf seiner Außenfläche parallel zur Ventilachse umfasst, in der das gasförmige Medium nach dem Ausströmen aus der Auslassöffnung entlangströmt; und / der wobei der Absperrkörper (20) kugelförmig ist; und/oder wobei das Ventil mehrere Auslassöffnungen (40) umfasst, die, vorzugsweise äquidistant, entlang eines Kreises um die Längsachse des Ventils angeordnet sind.

13. Rückschlagventil nach Anspruch 12, wobei jede Vertiefung (81) gegenüberliegend der jeweiligen Auslassöffnung (40) parallel zur Ventilachse eine Ausfräsung (90) umfasst, die vorzugsweise ellipsenförmig ist.

14. Betankungsbaugruppe für ein gasförmiges Medium, insbesondere Wasserstoff, umfassend:
einen Betankungspfad,
einen Einlass für das gasförmige Medium, der mit dem Betankungspfad verbunden ist,
einen Auslass für das gasförmige Medium, und
ein Rückschlagventil nach einem der Ansprüche 1 bis 9, das mit dem Auslass verbunden ist und in einen Druckbehälter mündet.

15. Verteilbaugruppe für ein gasförmiges Medium, insbesondere Wasserstoff, umfassend:
einen Grundkörper,
einen Einlass für das gasförmige Medium, der mit dem Grundkörper verbunden ist,
einen Auslass für das gasförmige Medium, und
ein Rückschlagventil nach einem der Ansprüche 10 bis 13, das mit dem Auslass verbunden ist.
